# EUROPEAN PATENT APPLICATION

(11) **EP 4 589 032 A1**
(43) Date of publication of application: **23.07.2025**
(21) Application number: 24386127.5
(22) Date of filing: 12.11.2024
(51) Int. Cl.: C22B 1/00, C22B 7/00, C22B 7/02, C22B 7/04, C22B 11/00, C22B 3/00

(54) **HYDROMETALLURGICAL METHOD OF PRODUCTION OF IRON, LEAD AND SILVER, FROM RESIDUES OF PYROMETALLURGICAL AND HYDROMETALLURGICAL METAL PRODUCTION PROCESSES, USING NEW, ORGANIC AND INORGANIC, SYNTHETIC AQUEOUS SOLUTIONS**

(30) Priority: 22.01.2024 GR 20240100035
(71) Applicant: Argyropoulos, Sokratis, 54630 Thessaloniki (GR)
(72) Inventor: Argyropoulos, Sokratis, 54630 Thessaloniki (GR)

(57) **Abstract**

A Method is provided for the hydrometallurgical production of Iron, Lead and Silver from Red Mud and Slug of pyrometallurgy and other similar type of secondary concentrates - residues of production processes, with high concentrations of Iron, Lead and Silver, as well as from residues of Copper White Dust - dust from converters. By applying the proposed method, it is possible to hydrometallurgical production of Iron, Lead and Silver efficiently, from the specific materials, which come from pyrometallurgical methods and other metal production.

This specific method enables the hydrometallurgical extraction - production of Iron, Lead and Silver from the specific residues of hydrometallurgical and pyrometallurgical processes, using new chemical solutions and processing lines, which until now could not be processed efficiently and essentially remained unutilized, due to low concentrations or due to the chemical compounds in which the metals were found, rendering them non-recoverable.

## Description

### Technical field

The present invention concerns the hydrometallurgical production of Iron, Lead and Silver from Red mud and Slug of pyrometallurgy and other similar type secondary concentrates - residues of production processes, with high concentrations of Iron, Lead and Silver, as well as from residues of Copper White Dust - dust from converters. By applying the proposed method, the hydrometallurgical production of Iron, Lead and Silver is possible efficiently, from the specific materials, which come from hydrometallurgical and pyrometallurgical production processes.

### Existing state of the art

### Wealz Lead Recovery Method

In this method, metal oxides are reduced and zinc, lead and cadmium metals are sublimated. The Waelz method takes place in a rotary kiln, in which the powder is heated together with a reducing agent (usually coke). The furnace rotates at a slow rate and the residence time of the feed varies between 8 and 10 hours. The furnace can be divided into 4 zones: the feed drying zone, the reductant and feed combustion zone, the reduction reaction zone and the slag zone. During the process of reducing the oxides, zinc, lead and cadmium are sublimated and led to a gas collection system, where, reacting with the oxygen of the atmosphere, they are solidified and collected as oxides. Each pyrometallurgical method is based on the Waelz method in terms of process chemistry, with variations in their technological application. Initially there is the storage and supply area for the raw materials (1).

These are then fed to the Waelz furnace (2), in the production area (3). Slag (7) is produced from the exit of the furnace, while the metals, in gaseous form, exit from the other side of the furnace. The metals end up in a device in contact with the atmospheric air, where they exit the current from the furnace exhaust gases, while the rest of the exhaust gases are led to a filter device (5), where an adsorber (6) is then added to collect the gases pollutants, before the air stream ends up in the atmosphere.

### Iron production method

Cast iron is produced mainly from hematite in special furnaces, blast furnaces. The blast furnace is a cylindrical vertical furnace 20-30m high with a diameter of 6m, consisting of a steel mantle lined internally with refractory bricks. The blast furnace is fed from the top with iron ore, coke and limestone, CaCO₃, (compost), while dry air at a temperature of 600 - 800 °C is channeled through openings arranged in a circle at its base. Initially, oxygen from the air, introduced from the base, oxidizes part of the coke to carbon dioxide with the simultaneous release of heat:

C₍ₛ₎ + O_{2(g)} → CO_{2(g)}

With the heat released, the temperature is raised to such an extent that the relevant reactions take place and the products are kept in a molten state. The hot carbon dioxide produced, as it rises in the blast furnace, is reduced by the coke to carbon monoxide:

CO₂ + C → 2CO

Carbon monoxide, as it rises to the higher zones of the blast furnace, reduces the ore to spongy metallic iron through a series of intermediate reactions:

3Fe₂O₃ + CO → 2Fe₃O₄ + CO₂

Fe₃O₄ + CO → 3FeO + CO₂

FeO + CO → Fe + CO₂

Also, small amounts of iron(II) oxide, which escape reduction, are eventually reduced in the middle and lower zones of the blast furnace by the coal itself:

FeO + C → Fe + CO

CO₂, formed during the above reactions, is again reduced by coke to CO, which participates in the cycle of reactions, while spongy metallic Fe melts in the lower parts of the blast furnace and flows to its base from where it is extracted. The ore's earthy impurities, silicon dioxide (SiO₂) and silicates, react with the limestone to form fusible calcium silicates, which float in the molten metal and are removed as slag. Pig iron melts between 1100 and 1300 °C and is composed of 90% iron, 3 to 5% carbon, while also containing impurities of manganese, silicon, phosphorus and sulphur, which make it hard, brittle and unforgeable.

### Silver production method

### Parkes method

The Parkes method is a pyrometallurgical process, which is based on the fact that at temperatures below 400 °C, zinc (Zn) and lead (Pb) are practically immiscible, and molten mixtures of these two metals when cooled below 400 °C separates into a layer of molten Pb, on which a layer of solid Zn floats. Ag is very soluble in liquid Zn and when the latter solidifies, Ag precipitates as Ag/Zn mixed crystals. Thus, Ag contained in molten Pb can be extracted after dissolving in molten Zn in the form of "zinc foam", which floats on the lead. This "foam" however contains lead impurities so it is carefully heated above the melting point of lead, whereupon the silver-free lead is separated and recycled, while the "zinc foam", which now contains about 75% Pb and up to 10% Ag , is distilled and the enriched lead, containing 8 % to 12 % Ag, is subjected to cupping.

### Cupping

During the cupping process, mineral sulphides containing silver are roasted and then reduced with carbon (coke). This is how the first silver alloy was created which also contains copper, lead, zinc and possibly other metals. This alloy is melted in special porous calcium phosphate furnaces and at the same time a strong current of air is blown through. Thus the metals (if present) except for silver, are oxidized to their respective oxides which float in the melt and are removed by pouring while their residues are absorbed by the porous material of the furnace. The impure silver obtained in this way is dissolved in sulfuric acid, so that the gold, if any, is separated at the same time.

### Advantages of invention

1. Production - recovery of metal, from materials from which conventional methods cannot extract Iron, Lead and Silver, due to their very small concentrations.
2. Production - recovery of metal, from materials from which conventional methods cannot extract Iron, Lead or Silver, due to the chemical bonds and compounds in which the metals are found and make them unrecoverable.
3. The produced metals have a high degree of purity that exceeds the average degree of purity achieved by existing technologies.
4. The recovery rate of the specific metals exceeds 85%, even if their concentration in the starting material is less than 0.40%.
5. The energy consumption of the proposed production line is low compared to pyrometallurgical processing methods.
6. 6. The circular economy and the saving of primary mineral resources are promoted, through the sequestration of metals in a percentage of more than 85% even when their concentrations are very small.

### Disclosure of invention

The processing line of the three (3) materials is the same, in its basic stages, but the chemical reagents used and their quantities per application and the process in some individual sections differ. Also, in the case of residues to be processed, such as Copper White Dust - dust from converters, where the Iron concentrations are very low, the Iron production stage can be omitted as not economically beneficial.

### Red Sludge and Pyrometallurgy Slug Processing Line

The proposed application for the production of Iron, Lead and Silver has the following stages:
1. Pre-processing - preparation of incoming materials
2. Chemical dissolution stage
3. Mechanical separation stage
4. Chemical precipitation stage 1 - Iron production
5. Chemical precipitation stage 2 - Lead production
6. Chemical precipitation stage 3 - Silver production

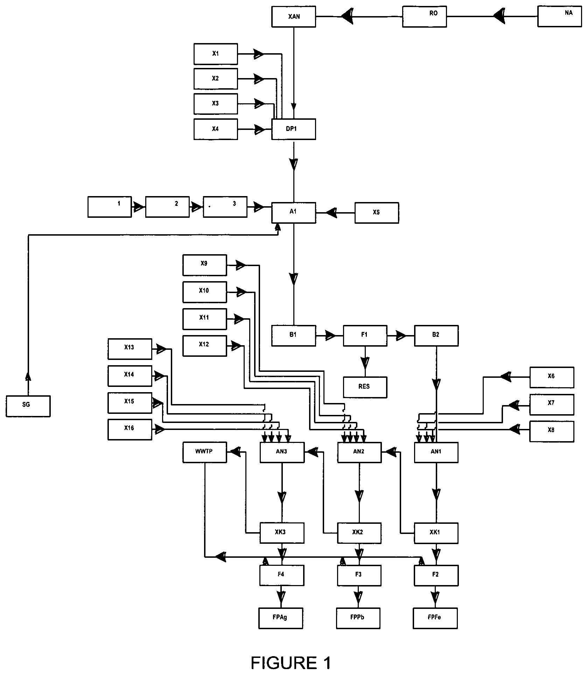

Figure 1 shows the flow diagram of the process for the production of Iron, Lead and Silver from Pyrometallurgical Slug, Red Sludge etc materials.

### Pre-processing - preparation of incoming materials

The feed of the processing line, with material, will be carried out by a loader, which will feed the material into a hopper (1). The reception hopper will be, in its lower part, equipped with a mechanism for "breaking" aggregates (jaw crusher) (2). The crusher is placed, in order to reduce the size of the incoming materials, in a particle size of less than 30.00 mm.

By feeding the hopper, the material will be guided, using a conveyor belt, to a belt scale, to weigh the incoming material, and will be fed to a delumber hopper. The delumber is a type of crusher, and after this it will be fed to a ball mill (2), to reduce the size to the desired size. The desired particle size value is 50 µm. In order to achieve this granulometry in this particular machine, water will be added in a ratio of approximately 50% - 50% with the incoming material. The use of water is due to the very small particle size (≤ 50µm), where only through the use of water, the material can be transferred to the next stage. The water, along with the material, exits the outlet end of the ball mill and ends up in a separation screw. The special construction of the screw allows the separation of particles with a dimension > 50µm from those with a dimension ≤ 50µm, as a result of which the particles with a dimension > 50µm return to the entrance of the ball mill, while those with a dimension ≤ 50µm, together with the

water, end up in a small tank of suitable capacity and from there with a pump are to be led to the gyroscopic sieve of suitable capacity (3).

In the gyroscopic sieve (3), a mechanical size separation of the incoming material will take place, so that the particles with a diameter ≤ 50µm continue to the next stage. The larger diameter material will exit the screen and end up on the separation screw to return back to the ball mill inlet to pass through it again. The material of suitable diameter, together with the water, will pass through the sieve and will be concentrated in a small tank of suitable capacity, from where it will be initially fed to a collection tank (buffer). From the collection tank, in which there will be agitation so that the solids continue to remain in suspension, the liquid will be fed to the separation reactor (A1), using a transfer pump.

### Chemical dissolution stage

The stage of metal separation and chemical etching is carried out in a suitable reactor (A1). The operating cycle of the reactor (A1) is as follows: transfer and filling of the water-raw material solution, from the collection tank (buffer), at the same time filling with a mixture of water and chemicals, from the chemical preparation tank (DP1), and then filling of the reactor with tap water (X5), until the total volume of the mixture of water - raw material - chemicals, inside the reactor (A1), reaches the desired capacity, treatment process of the solution, discharge of the reactor to the collection tank (B1). Upon completion of each processing cycle, the same processing cycle begins again. The reactor (A1) is fed in each operating cycle, with a ratio of material/water-chemicals 1:9. The mixture of chemicals is prepared for each operating cycle, in a chemical preparation vessel (DP1).

In more detail, the processing process in each operating cycle at this stage is as follows:
Initially, the filling of the reactor (A1) with the chemicals begins. Chemicals are prepared in a specific proportion, in the chemical preparation tank (DP1). The preparation of the liquid treatment solution (Activated Dissolver) is carried out in the chemical preparation tank (DP1). Upon completion of the preparation of this solution, it is pumped into the reactor (A1). In the tank (DP1), the following chemicals are supplied, for the preparation of the treatment solution (Activated Dissolver), in appropriate proportions: EDTA aqueous solution (X1), aqueous solution HNO₃ 65,00% - 68,00% (X2), aqueous solution HCl 33,00% (X3), Sulfonic acid (X4) deionized water (XAN). The deionized water for the reactor (A1) is produced by a reverse osmosis (RO) system, using tap water (NA). Upon completion of the supply of chemicals and tap water (X5), filling in the reactor (A1), stirring begins, as well as the addition of the material to be treated.

Upon completion of the filling of the reactor, the main stage of treatment - chemical etching begins, which requires a total of 5.00 hours. The pH expected value at the end of this stage is 1,5 - 1,7.

During the process time there is heating of the reactor, so that they maintain a specific temperature of forty-five degrees Celsius (45°C), during processing. The reactors are heated by a suitable steam distribution system, which will be produced by a steam boiler (SG). At the completion of the treatment time, the content of the reactor is emptied into a buffer tank (B1), in which there is agitation and is in a state of readiness for the start of the next treatment cycle. In each processing cycle, the reactor (A1) is fed with the water - raw material solution from the buffer collection tank, with the water - chemical solution from the chemical preparation tank (DP1) and discharges into a buffer tank ( B1).

The solution, from the reactor (A1), after completing its treatment, will be transferred to the buffer tank (B1). From the buffer tank (B1), the solution will be fed, using a suitable pump to the filter press (F1), of suitable capacity, in order to separate the liquid from the solid phase of the solution.

From the dehydration in the filter press (F1), two products will come: the solid residue (RES), which is sent to management (for disposal or for second pass treatment) and the liquid, where the separated metals are and which will be stored in the buffer tank (B2) of washing liquid, of suitable capacity, for controlled feeding in the next treatment stage. The drainage from the filter press (F1) will initially be collected in a transfer buffer tank of suitable volume and from there by pump it will be sent to the buffer tank (B2).

The reactor system (A1) will be of closed type. It will have vents of the appropriate type, so that in case there is an increase in pressure inside the container, it can be relieved from a specific point. At each relief point of the reactor (A1), there will be a gas inlet and a collection network, which will end in a gas decontamination system, which will consist of one (1) liquid scrubber and one (1) activated carbon filter, in series, so that there is a complete treatment of the gaseous stream before it is discharged into the atmosphere.

### Chemical precipitation stage 1 - Iron production

From the buffer tank (B2), the solution is fed, with a constant flow, to a mixing tank (AN1), of a suitable volume, using a pump. Upon completion of the transfer, stirring of the liquid begins with a suitable stirring system, with a stirrer, and the following chemicals are added: NaOH 50%, (X6), Propylene glycol - PG (X7) and Zeolite (X8). NaOH 50% (X6) is added until the pH value is 3 to 4. During this stage the separation of Iron is achieved, from the other metals in form of Fe(OH)₂ and FeO. The treatment time is one hour (1.00h). When the stage is complete, the solution is transferred with pump to the chemical sedimentation tank 1 (XK1), where it stays in steady state for one hour (1.00h). During this stage, Iron in form of Fe(OH)₂ and FeO precipitates due to its high molecular weight to the bottom of the tank (XK1). When the one hour steady state time is over, the solid that had been gathered, with water, at the bottom of the tank (XK1) is pumped to a collection tank (B3), and the rest of the solution is pumped to mixing tank (AN2) for the next treatment stage. The solid from tank (B3) is fed to filter press (F1), in order to be dehydrated. During the dehydration process, the final Iron product is produced in form of Fe(OH)₂ and FeO (FPFE), which is gathered in bins and the leachate which is collected to a buffer tank (BΣΣ) and is sent to a Wastewater Treatment Plant (WWTP).

### Chemical precipitation stage 2 - Lead production

When the solution is transferred from chemical precipitation tank 1 (XK1) to mixing tank 2 (AN2) is finished, mixing of the solution is started, with a proper mixing system, with agitator and the following reagents are added: NaOH 50%, (X9), Propylene glycol - PG (X10), Sodium dimethyl dithiocarbomate (X11) and Methyl isobutyl carbinol (X12). NaOH 50% (X9) is added until the pH value is 6,50 to 7,50. During this stage the separation of Lead is achieved, from the other metals in form of PbO₂. The treatment time is one hour (1.00h). When the stage is complete, the solution is transferred with pump to the chemical sedimentation tank 2 (XK2), where it stays in steady state for one hour (1.00h). During this stage, Lead in form of PbO₂ precipitates due to its high molecular weight to the bottom of the tank (XK2). When the one-hour steady state time is over, the solid that had been gathered, with water, at the bottom of the tank (XK2) is pumped to a collection tank (B4), and the rest of the solution is pumped to mixing tank (AN3) for the next treatment stage. The solid from tank (B4) is fed to filter press (F2), in order to be dehydrated. During the dehydration process, the final Lead product is produced in form of PbOz (FPPb), which is gathered in bins and the leachate which is collected to a buffer tank (BΣΣ) and is sent to a Wastewater Treatment Plant (WWTP).

### Chemical precipitation stage 3 - Silver production

When the solution is transferred from chemical precipitation tank 2 (XK2) to mixing tank 3 (AN3) is finished, mixing of the solution is started, with a proper mixing system, with agitator and the following reagents are added: NaOH 50%, (X13), Propylene glycol - PG (X14), Sodium dimethyl dithiocarbomate (X15) and Methyl isobutyl carbinol (X16). NaOH 50% (X13) is added until the pH value is 9.0 to 10.0. During this stage the separation of Silver is achieved, from the other metals in form of Ag₂O. The treatment time is one hour (1.00h). When the stage is complete, the solution is transferred with pump to the chemical sedimentation tank 3 (XK3), where it stays in steady state for one hour (1,00h). During this stage, Silver in form of Ag₂O precipitates due to its high molecular weight to the bottom of the tank (XK3). When the one-hour steady state time is over, the solid that had been gathered, with water, at the bottom of the tank (XK3) is pumped to a collection tank (B5), and the rest of the solution is sent to a Wastewater Treatment Plant (WWTP). The solid from tank (B5) is fed to filter press (F3), in order to be dehydrated. During the dehydration process, the final silver product is produced in form of Ag₂O (FPAg), which is gathered in bins and the leachate which is collected to a buffer tank (BΣΣ) and is sent to a Wastewater Treatment Plant (WWTP).

The reagents that they are used in the process are:
*Dissolution stage*
Aqueous solution EDTA, Aqueous solution HNO₃ 65,00% - 68,00%, Aqueous solution
HCl 33,00%, deionized water, tap water, Metasulfonic acid
*Στάδ* 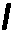 *o χηµ* 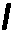 *κώv καθ* 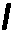 *ζήσεωv*
Methyl isobutyl carbinol, Sodium dimethyl dithiocarbamate, NaOH 50%, Propylene glycol - PG, Zeolite

### White Copper Dust - Dust from converters Processing Line

The proposed application for the production of Lead and Silver has the following stages:
1. Pre-processing - preparation of incoming materials
2. Chemical dissolution stage
3. Mechanical separation stage
4. Chemical precipitation stage 1 - Lead production
5. Chemical precipitation stage 2 - Silver production

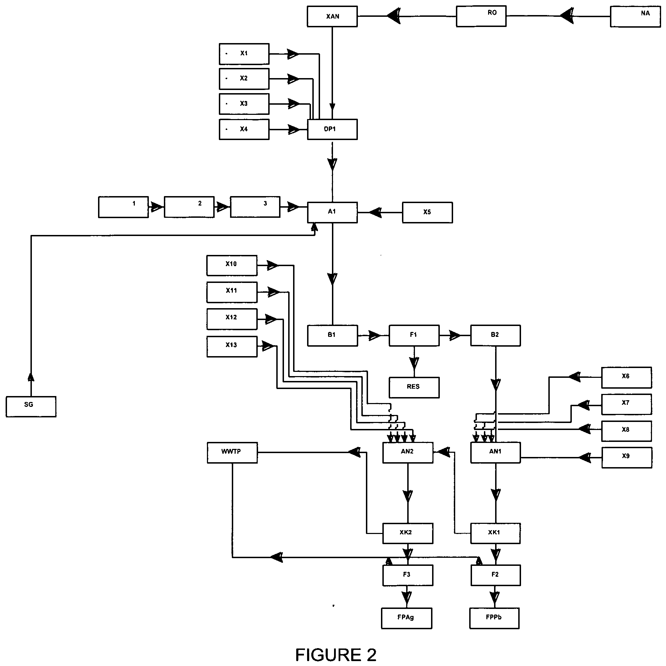

Figure 2 shows the flow diagram of the process for the production of Lead and Silver from Copper White Dust - dust from converters.

### Pre-processing - preparation of incoming materials

The feed of the processing line, with material, will be carried out by a loader, which will feed the material into a hopper (1). The reception hopper will be, in its lower part, equipped with a mechanism for "breaking" aggregates (jaw crusher) (2). The crusher is placed, in order to reduce the size of the incoming materials, in a particle size of less than 30.00 mm.

By feeding the hopper, the material will be guided, using a conveyor belt, to a belt scale, to weigh the incoming material, and will be fed to a delumber hopper. The delumber is a type of crusher, and after this it will be fed to a ball mill (2), to reduce the size to the desired size. The desired particle size value is 50 µm. In order to achieve this granulometry in this particular machine, water will be added in a ratio of approximately 50% - 50% with the incoming material. The use of water is due to the very small particle size (≤ 50µm), where only through the use of water, the material can be transferred to the next stage. The water, along with the material, exits the outlet end of the ball mill and ends up in a separation screw. The special construction of the screw allows the separation of particles with a dimension > 50µm from those with a dimension ≤ 50µm, as a result of which the particles with a dimension > 50µm return to the entrance of the ball mill, while those with a dimension ≤ 50µm, together with the water, end up in a small tank of suitable capacity and from there with a pump are to be led to the gyroscopic sieve of suitable capacity (3).

In the gyroscopic sieve (3), a mechanical size separation of the incoming material will take place, so that the particles with a diameter ≤ 50µm continue to the next stage. The larger diameter material will exit the screen and end up on the separation screw to return back to the ball mill inlet to pass through it again. The material of suitable diameter, together with the water, will pass through the sieve and will be concentrated in a small tank of suitable capacity, from where it will be initially fed to a collection tank (buffer). From the collection tank, in which there will be agitation so that the solids continue to remain in suspension, the liquid will be fed to the separation reactor (A1), using a transfer pump.

### Chemical dissolution stage

The stage of metal separation and chemical etching is carried out in a suitable reactor (A1). The operating cycle of the reactor (A1) is as follows: transfer and filling of the water-raw material solution, from the collection tank (buffer), at the same time filling with a mixture of water and chemicals, from the chemical preparation tank (DP1), and then filling of the reactor with tap water (X5), until the total volume of the mixture of water - raw material - chemicals, inside the reactor (A1), reaches the desired capacity, treatment process of the solution, discharge of the reactor to the collection tank (B1). Upon completion of each processing cycle, the same processing cycle begins again. The reactor (A1) is fed in each operating cycle, with a ratio of material/water-chemicals 1:9. The mixture of chemicals is prepared for each operating cycle, in a chemical preparation vessel (DP1).

In more detail, the processing process in each operating cycle at this stage is as follows:
Initially, the filling of the reactor (A1) with the chemicals begins. Chemicals are prepared in a specific proportion, in the chemical preparation tank (DP1). The preparation of the liquid treatment solution (Activated Dissolver) is carried out in the chemical preparation tank (DP1). Upon completion of the preparation of this solution, it is pumped into the reactor (A1). In the tank (DP1), the following chemicals are supplied, for the preparation of the treatment solution (Activated Dissolver), in appropriate proportions: EDTA aqueous solution (X1), aqueous solution HNO₃ 65,00% - 68,00% (X2), aqueous solution HCl 33,00% (X3), Sulfonic acid (X4) deionized water (XAN). The deionized water for the reactor (A1) is produced by a reverse osmosis (RO) system, using tap water (NA). Upon completion of the supply of chemicals and tap water (X5), filling in the reactor (A1), stirring begins, as well as the addition of the material to be treated.

Upon completion of the filling of the reactor, the main stage of treatment - chemical etching begins, which requires a total of 5.00 hours. The pH expected value at the end of this stage is 1,5 - 1,7.

During the process time there is heating of the reactor, so that they maintain a specific temperature of forty five degrees Celsius (45°C), during processing. The reactors are heated by a suitable steam distribution system, which will be produced by a steam boiler (SG). At the completion of the treatment time, the content of the reactor is emptied into a buffer tank (B1), in which there is agitation and is in a state of readiness for the start of the next treatment cycle. In each processing cycle, the reactor (A1) is fed with the water - raw material solution from the buffer collection tank, with the water - chemical solution from the chemical preparation tank (DP1) and discharges into a buffer tank (B1).

The solution, from the reactor (A1), after completing its treatment, will be transferred to the buffer tank (B1). From the buffer tank (B1), the solution will be fed, using a suitable pump to the filter press (F1), of suitable capacity, in order to separate the liquid from the solid phase of the solution.

From the dehydration in the filter press (F1), two products will come: the solid residue (RES), which is sent to management (for disposal or for second pass treatment) and the liquid, where the separated metals are and which will be stored in the buffer tank (B2) of washing liquid, of suitable capacity, for controlled feeding in the next treatment stage. The drainage from the filter press (F1) will initially be collected in a transfer buffer tank of suitable volume and from there by pump it will be sent to the buffer tank (B2).

The reactor system (A1) will be of closed type. It will have vents of the appropriate type, so that in case there is an increase in pressure inside the container, it can be relieved from a specific point. At each relief point of the reactor (A1), there will be a gas inlet and a collection network, which will end in a gas decontamination system, which will consist of one (1) liquid scrubber and one (1) activated carbon filter, in series, so that there is a complete treatment of the gaseous stream before it is discharged into the atmosphere.

### Chemical precipitation stage 1 - Lead production

From the buffer tank (B2), the solution is fed, with a constant flow, to a mixing tank (AN1), of a suitable volume, using a pump. Upon completion of the transfer, stirring of the liquid begins with a suitable stirring system, with a stirrer, and the following chemicals are added: NaOH 50%, (X5), Πρoπuλεvoγλuκóλη 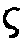 - PG (X6), Sodium dimethyl dithiocarbomate (X7) and Methyl isobutyl carbinol (X8). NaOH 50% (X6) is added until the pH value is 7.5. During this stage the separation of Lead is achieved from the other metals in form of PbO₂. The treatment time is one hour (1.00h). When the stage is complete, the solution is transferred with pump to the chemical sedimentation tank 1 (XK1), where it stays in steady state for one hour (1.00h). During this stage, lead in form of PbO₂ precipitates due to its high molecular weight to the bottom of the tank (XK1). When the one-hour steady state time is over, the solid that had been gathered, with water, at the bottom of the tank (XK1) is pumped to a collection tank (B3), and the rest of the solution is pumped to mixing tank (AN2) for the next treatment stage. The solid from tank (B3) is fed to filter press (F1), in order to be dehydrated. During the dehydration process, the final Lead product is produced in form of PbO₂ (FPPb), which is gathered in bins and the leachate which is collected to a buffer tank (BΣΣ) and is sent to a Wastewater Treatment Plant (WWTP).

### Chemical precipitation stage 2 - Silver production

When the solution is transferred from chemical precipitation tank 1 (XK1) to mixing tank 2 (AN2) is finished, mixing of the solution is started, with a proper mixing system, with agitator and the following reagents are added: NaOH 50%, (X9), Propylene glycol - PG (X10), Sodium dimethyl dithiocarbomate (X11) and Methyl isobutyl carbinol (X12). NaOH 50% (X9) is added until the pH value is 9.5. During this stage the separation of Silver is achieved, from the other metals in form of Ag₂O. The treatment time is one hour (1.00h). When the stage is complete, the solution is transferred with pump to the chemical sedimentation tank 2 (XK2), where it stays in steady state for one hour (1.00h). During this stage, Silver in form of Ag₂O precipitates due to its high molecular weight to the bottom of the tank (XK2). When the one-hour steady state time is over, the solid that had been gathered, with water, at the bottom of the tank (XK2) is pumped to a collection tank (B4), and the rest of the solution is sent to a Wastewater Treatment Plant (WWTP). The solid from tank (B4) is fed to filter press (F2), in order to be dehydrated. During the dehydration process, the final Silver product is produced in form of Ag₂O (FPAg), which is gathered in bins and the leachate which is collected to a buffer tank (BΣΣ) and is sent to a Wastewater Treatment Plant (WWTP).

The reagents that they are used in the process are:
*Dissolution stage*
Aqueous solution EDTA, Aqueous solution HNO₃ 65,00% - 68,00%, Aqueous solution HCl 33,00%, deionized water, tap water, Metasulfonic acid
*Στάδ* 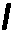 *o χηµ* 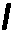 *κώv καθ* 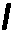 *ζήσεωv*
Methyl isobutyl carbinol, Sodium dimethyl dithiocarbamate, NaOH 50%, Propylene glycol - PG

### Application examble

### Iron, Lead and Silver production from pyrometallurgy Slug

In this example, pyrometallurgy Slug treatment was carried out, in order to recover Iron, Lead and Silver. In this application, one thousand kilograms (1,000 kg) of red mud were treated, using nine cubic meters (9 m³) of initial treatment solution. The table below shows a typical composition of the specific material to be treated as well as the process and consumption of chemicals during application

**Table 1: Chemical analyses of Pyrometallurgy Slug**

| **A/A** | **Parameters** | **Units** | **Results** | **Method of Analysis** |
|---|---|---|---|---|
| 1 | Total Organic Carbon (TOC) | mg/kg C | 142.0 | In House based on APHA 5310D |
| 2 | Mineral Oils C10-C40 | mg/kg | < 5 | Based on ISO 16703:2004 |
| 3 | Benzene | mg/kg | < 0.02 | EPA 8015C / GC-MS-MS |
| 4 | Toluene | mg/kg | < 0.02 | EPA 8015C / GC-MS-MS |
| 5 | Ethylbenzene | mg/kg | < 0.02 | EPA 8015C / GC-MS-MS |
| 6 | Total Xylene | mg/kg | < 0.02 | EPA 8015C / GC-MS-MS |
| Sum | Sum of BTEX | mg/kg | < 0.02 | EPA 8015C / GC-MS-MS |
| 7 | Cyanide (CN) | mg/kg | < 0.2 | EPA 9013 A |
| 8 | Ammonium Nitrogen (NH₄-N) | mg/kg | < 5 | UV-Vis |
| 9 | Nitrogen N-Kjeldahl | % w/w | 0.02 | Kjeldahl |
| 10 | pH | - | 7.26 | Soil:Water = 1:2, pH-meter |
| 11 | Sulfur (S) | % w/w | 1.014 | LECO-S-932 |
| 12 | Carbon (C) | % w/w | 0.59 | ASTM D 5291:2016 |
| 13 | Hydrogen (H) | % w/w | 0.22 | ASTM D 5291:2016 |
| 14 | Calcium (Ca) | % w/w | 6.7 | Aqua Regia / ICPOES |
| 15 | Cadmium (Cd) | mg/kg | 117.8 | |
| 16 | Chromium (Cr) | mg/kg | 104.5 | |
| 17 | Arsenic (As) | mg/kg | 1357.1 | |
| 18 | Copper (Cu) | % w/w | 0.6 | |
| 19 | Aluminum (Al) | % w/w | 2.5 | |
| 20 | Boron (B) | mg/kg | 35.9 | |
| 21 | Cobalt (Co) | mg/kg | 70.6 | |
| 22 | Barium (Ba) | mg/kg | 63.6 | |
| 23 | Iron (Fe) | % w/w | 26.8 | |
| 24 | Potassium (K) | % w/w | 0.4 | |
| 25 | Sodium (Na) | % w/w | 0.2 | |
| 26 | Lead (Pb) | % w/w | 3.0 | |
| 27 | Magnesium (Mg) | % w/w | 0.5 | |
| 28 | Manganese (Mn) | % w/w | 0.5 | |
| 29 | Zinc (Zn) | % w/w | 9.1 | |
| 30 | Nickel (Ni) | mg/kg | 59.4 | |
| 31 | Antimony (Sb) | mg/kg | 577.1 | |
| 32 | Molybdenum (Mo) | mg/kg | 49.1 | |
| 33 | Strontium (Sr) | mg/kg | 219.3 | |
| 34 | Titanium (Ti) | % w/w | 0.1 | |
| 35 | Mercury (Hg) | mg/kg | < 2.0 | |
| 36 | Vanadium (V) | mg/kg | 70.6 | |
| 37 | Silver (Ag) | mg/kg | 70 | |
| 38 | Fluoride (F⁻) | mg/kg | 1.0 | HPLC - Conductivity Det. |
| 39 | Chloride (Cl⁻) | mg/kg | 15.42 | |
| 40 | Nitrites (NO₂⁻) | mg/kg | < 0.50 | |
| 41 | Nitrate (NO₃⁻) | mg/kg | 13.91 | |
| 42 | Sulfates (SO₄⁻²) | mg/kg | 929.21 | |
| 43 | Phosphates (PO₄⁻³) | mg/kg | < 0.50 | |

### Chemical dissolution stage:

Activated dissolver production: For the production of one cubic meter (1,00 m³) of activated dissolver, 3,00 It EDTA, 300 It aqueous solution HNO₃ 65%-68%, 300 It aqueous solution HCl 33%, 50 It Sulfonic acid and 347 It deionized water are used.

During the application, the solid/water ratio is 1:9. The proportions of the substances for the treatment of one thousand kilos (1.000 kg) of pyrometallurgy slug are the following: 8.500 It tap water, 500 It activated dissolver.

### Chemical participation stage 1

For the production of Iron the following reagents were used: 20,00 It NaOH 50%, 2,50 It Prolylene glycol - PG, 0,50 kg Zeolite.

### Chemical participation stage 2

For the production of Lead the following reagents were used: 10,00 It NaOH 50%, 1,25 It Propylene glycol - PG, 0,50 It methyl isobutyl carbinol, 12,00 It Sodium dimethyl dithio carbamate

### Chemical participation stage 3

For the production of Silver the following reagents were used: 2,50 It NaOH 50%, 0,50 It Propylene glycol - PG, 0,25 It methyl isobutyl carbinol, 1,00 It Sodium dimethyl dithio carbamate

### Lead and Silver production from Copper White Dust - Dust from convertes

In this example, *Copper White Dust- Dust from converters,* treatment was carried out, in order to recover Lead and Silver. In this application, one thousand kilograms (1,000 kg) of Copper White Dust - Dust from converters, were treated, using nine cubic meters (9 m³) of initial treatment solution. The table below shows a typical composition of the specific material to be treated as well as the process and consumption of chemicals during application.

**Table 2: Typical composition of Copper White Dust - Dust from converters**

| **Parameter (Unit)** | **Value** | **Detect Limit** | **Measurements Method** |
|---|---|---|---|
| AI (%) | 0,05 | 0,01 | TD-ICP |
| Ca (%) | 0,02 | 0,01 | TD-ICP |
| Cd (%) | 1,86 | 0,003 | 4 acid ICPOES |
| Cu (%) | 32,40 | 0,001 | 4 acid ICPOES |
| Fe (%) | ND | 0,01 | INAA |
| K (%) | 0,13 | 0,01 | TD-ICP |
| Mg (%) | ND | 0,01 | TD-ICP |
| Na (%) | 0,05 | 0,01 | INAA |
| P (%) | 0,018 | 0,001 | TD-ICP |
| Pb (%) | 4,84 | 0,003 | 4 acid ICPOES |
| S (%) | 13,30 | 0,01 | TD-ICP |
| Ti (%) | ND | 0,01 | TD-ICP |
| Zn (%) | 16,90 | 0,001 | 4 acid ICPOES |
| Ag | 61,40 | 0,05 | MULT INAA/TD-ICP/TD-MS |
| As | >10.000 | 0,5 | INAA |
| Au | 1.140 | 2,0 | INAA |
| Ba | 12 | 1,0 | MULT INAA/TD-ICP-MS |
| Be | ND | 0,1 | MULT INAA/TD-ICP-MS |
| Bi | 6.420 | 0,1 | MULT INAA/TD-ICP-MS |
| Br | ND | 0,5 | INAA |
| Cd | >2.000 | 0,1 | MULT INAA/TD-ICP-MS |
| Co | 2,30 | 0,1 | MULT INAA/TD-ICP-MS |
| Cr | ND | 1,0 | MULT INAA/TD-ICP-MS |
| Cs | 1,25 | 0,05 | MULT INAA/TD-ICP-MS |
| Cu | >10.000 | 0,2 | MULT INAA/TD-ICP-MS |
| Ga | 0,30 | 0,1 | TD-MS |
| Ge | 8,90 | 0,1 | TD-MS |
| Hf | ND | 0,1 | MULT INAA/TD-ICP-MS |
| Hg | ND | 1,0 | INAA |
| In | >100 | 0,1 | TD-MS |
| Ir | ND | 5,0 | TD-MS |
| Li | ND | 1,0 | TD-ICP |
| Mn | 18,00 | 1,0 | TD-ICP |
| Mo | 152,00 | 0,2 | TD-MS |
| Nb | ND | 0,1 | TD-MS |
| Ni | 31,10 | 0,5 | MULT INAA/TD-ICP/TD-MS |
| Pb | >5.000 | 0,5 | MULT TD-ICP/TD-ICP-MS |
| Rb | 8,90 | 0,2 | MULT INAA/TD-ICP-MS |
| Re | 3,07 | 0,001 | TD-MS |
| Sb | 883,00 | 0,1 | INAA |
| Se | 430,00 | 0,1 | MULT INAA/TD-ICP-MS |
| Sn | >200 | 1,0 | TD-MS |
| Sr | 1,30 | 0,2 | TD-MS |
| Ta | ND | 0,1 | MULT INAA/TD-ICP-MS |
| Te | 99,00 | 0,1 | TD-MS |
| Th | ND | 0,1 | MULT INAA/TD-ICP-MS |
| TI | >500 | 0,05 | TD-MS |
| V | 3,00 | 2,0 | TD-ICP |
| U | ND | 0,1 | MULT INAA/TD-ICP-MS |
| W | ND | 1,0 | INAA |
| Zr | ND | 1,0 | TD-MS |
| Zn | >100.000 | 0,5 | MULT INAA/TD-ICP/TD-MS |
| La | 0,10 | 0,1 | TD-MS |
| Ce | 0,20 | 0,1 | TD-MS |
| Pr | ND | 0,1 | TD-MS |
| Nd | 0,10 | 0,1 | TD-MS |
| Sm | ND | 0,1 | TD-MS |
| Eu | ND | 0,05 | TD-MS |
| Gd | ND | 0,1 | TD-MS |
| Tb | ND | 0,1 | TD-MS |
| Dy | ND | 0,1 | TD-MS |
| Ho | ND | 0,1 | TD-MS |
| Er | ND | 0,1 | TD-MS |
| Tm | ND | 0,1 | TD-MS |
| Yb | ND | 0,1 | TD-MS |
| Lu | ND | 0,05 | INAA |
| Y | ND | 0,1 | TD-MS |
| Sc | ND | 0,1 | INAA |

### Chemical dissolution stage:

Activated dissolver production: For the production of one cubic meter (1,00 m³) of activated dissolver, 3,00 It EDTA, 300 It aqueous solution HNO₃ 65%-68%, 300 It aqueous solution HCl 33%, 50 It Sulfonic acid and 347 It deionized water are used.

During the application, the solid/water ratio is 1:9. The proportions of the substances for the treatment of one thousand kilos (1.000 kg) of pyrometallurgy slug are the following: 8.500 It tap water, 500 It activated dissolver.

### Chemical participation stage 1

For the production of Lead the following reagents were used: 27,00 It NaOH 50%, 3,40 It Propylene glycol - PG, 1,35 It methyl isobutyl carbinol, 1232,40 It Sodium dimethyl dithio carbamate

### Chemical participation stage 3

For the production of Silver the following reagents were used: 6,75 It NaOH 50%, 1,35 It Propylene glycol - PG, 0,68 It methyl isobutyl carbinol, 2,70 It Sodium dimethyl dithio carbamate.

### Explanation of application results

### Production of Iron, Lead and Silver from pyrometallurtgy Slug, red mud and other similar composition materials.

According to the composition of pyrometallurgy slug, the initial concentration of Iron, Lead and Silver are 268,00 kgr/tn Fe, 30,00 kgr/tn Pb and 0,07 kgr/tn Ag, respectively. The produced quantities of Iron, Lead and Silver, with the application of the method are 222,50 kgr/tn Fe, 24,60 kgr/tn Pb and 0,063 kgr/tn Ag, respectively.

The percentages of production - recovery of the metals are presented to the following table:

**Table 3: Efficiency of the method**

| **Metal** | **Initial concentration (kgr/tn)** | **Produced quantity (kgr/tn raw material)** | **Efficiency (%)** |
|---|---|---|---|
| **Iron** | 268 | 222,50 | 83 |
| **Lead** | 30 | 24,60 | 82 |
| **Silver** | 0.07 | 0,063 | 89 |

### Production of Lead and Silver from Copper White Dust - Dust from converters

According to the composition of *Copper White Dust - Dust from converters,* the initial concentration of Lead and Silver are 48,00 kgr/tn Pb and 0,0614 kgr/tn Ag, respectively. The produced quantities of Lead and Silver, with the application of the method are 41,15 kgr/tn Pb and 0,056 kgr/tn Ag, respectively.

The percentages of production - recovery of the metals are presented to the following table:

**Table 3: Efficiency of the method**

| **Metal** | **Initial concentration (kgr/tn)** | **Produced quantity (kgr/tn raw material)** | **Efficiency (%)** |
|---|---|---|---|
| **Lead** | 30 | 24,60 | 82 |
| **Silver** | 0.07 | 0,063 | 89 |

As a conclusion, it can be said that this method is technically efficient and cost-effective as the efficiency in the production of metals is very high, in these materials.

## Claims

1. Method of hydrometallurgical production of Iron, Lead and Silver, with the application of chemical dissolution, Mechanical separation and chemical precipitation, using new chemical solutions, from residues of pyrometallurgical and hydrometallurgical processes, which belong to the categories Red mud, Pyrometallurgy Slug or similar secondary residues, rich in Iron, Lead and Silver and in the category of Copper White Dust - dust from converters.

2. Method of hydrometallurgical production of Iron, Lead and Silver, from residues of pyrometallurgical and hydrometallurgical processes, which belong to the categories Red mud, Pyrometallurgy Slug or similar secondary residues, rich in Iron, Lead and Silver and in the category of Copper White Dust - dust from converters, according to claim 1, where in the chemical dissolution stage, the following reagents are used in the reactor: EDTA aqueous solution, aqueous solution HNO₃ 65,00% - 68,00%, aqueous solution HCl 33,00%, deionized water, tap water, Metasulfonic acid.

3. Method of hydrometallurgical production of Iron, Lead and Silver, from residues of pyrometallurgical and hydrometallurgical processes, which belong to the categories Red mud, Pyrometallurgy Slug or similar secondary residues, rich in Iron, Lead and Silver, according to claim 1, where in chemical precipitation stage, for the production of Iron, the following reagents are used: NaOH 50%, Propylene glycol - PG, Zeolite.

4. Method of hydrometallurgical production of Iron, Lead and Silver, from residues of pyrometallurgical and hydrometallurgical processes, which belong to the categories Red mud, Pyrometallurgy Slug or similar secondary residues, rich in Iron, Lead and Silver, according to claim 1, where in chemical precipitation stage, for the production of Lead, the following reagents are used: Methyl isobutyl carbinol, Sodium dimethyl dithiocarbamate, NaOH 50%, Propylene glycol - PG.

5. Method of hydrometallurgical production of Iron, Lead and Silver, from residues of pyrometallurgical and hydrometallurgical processes, which belong to the categories Red mud, Pyrometallurgy Slug or similar secondary residues, rich in Iron, Lead and Silver, according to claim 1, where in chemical precipitation stage, for the production of Silver, the following reagents are used: Methyl isobutyl carbinol, Sodium dimethyl dithiocarbamate, NaOH 50%, Propylene glycol - PG.

6. Method of hydrometallurgical production of Lead and Silver, from Copper White Dust - dust from converters, according to claim 1, where according to claim 1, in chemical precipitation stage, for the production of Iron, the following reagents are used: NaOH 50%, Propylene glycol - PG, Zeolite.

7. Method of hydrometallurgical production of Lead and Silver, from Copper White Dust - dust from converters, according to claim 1, where according to claim 1, in chemical precipitation stage, for the production of Lead, the following reagents are used: Methyl isobutyl carbinol, Sodium dimethyl dithiocarbamate, NaOH 50%, Propylene Glycol - PG.

8. Method of hydrometallurgical production of Lead and Silver, from Copper White Dust - dust from converters, according to claim 1, where according to claim 1, in chemical precipitation stage, for the production of Silver, the following reagents are used: Methyl isobutyl carbinol, Sodium dimethyl dithiocarbamate, NaOH 50%, Propylene Glycol - PG.

9. Method of hydrometallurgical production of Iron, Lead and Silver, from residues of pyrometallurgical and hydrometallurgical processes, which belong to the categories Red mud, Pyrometallurgy Slug or similar secondary residues, rich in Iron, Lead and Silver, according to claim 1, 2, 3, 4 and 5, where the treatment line has the following stages: Pre-treatment, using crusher and sieve, metal separation - chemical dissolution, Mechanical Separation, Chemical Precipitation 1 - Iron production, Chemical Precipitation 2 - Lead production, Chemical Precipitation 3 - Silver Production.

10. Method of hydrometallurgical production of Iron, Lead and Silver, from Copper White Dust - dust from converters, according to claims 1, 2, 6, 7 and 8, where the treatment line has the following stages: Pre-treatment, using crusher and sieve, metal separation - chemical dissolution, Mechanical Separation, Chemical Precipitation 1 - Lead production, Chemical Precipitation 2 - Silver Production.
